# EUROPEAN PATENT APPLICATION

(11) **EP 1 201 830 A2**
(43) Date of publication of application: **02.05.2002**
(21) Application number: 01122443.3
(22) Date of filing: 20.09.2001
(51) Int. Cl.: E02F 9/02

(54) **Construction machine**

(30) Priority: 21.09.2000 JP 2000286370
(71) Applicant: KOBELCO CONSTRUCTION MACHINERY CO., LTD., Hiroshima-shi, Hiroshima 731-0138 (JP)
(72) Inventor: Shimokakiuchi, Hiroshi, Kobelco Construction, Hiroshima-shi, Hiroshima 731-0138 (JP); Takeda, Kazuyuki, c/o Kobelco Construction, Hiroshima-shi, Hiroshima 731-0138 (JP)
(74) Representative: Pellmann, Hans-Bernd, Dipl.-Ing.

(57) **Abstract**

The present invention provides a construction machine with a speed switching function having retractable crawler frames using crawler shoes, comprising: detection means for detecting an extended state or a retracted state of the crawler frames; travel driving means for driving the crawler shoes; speed switching means for switching speed of the travel driving means; and a controller for controlling destination of switching of the speed switching means when the retracted state of the crawler frames is detected by the detection means. Adequate travel speed can be obtained according to the extended or retracted state of the crawler frames.

## Description

### TECHNICAL FIELD

The present invention relates to a construction machine having a speed switching function for switching a traveling speed.

### BACKGROUND ART

A construction machine having a speed switching function is disclosed in Japanese Patent Application Laid-open No. Hei 3-168339 Publication.

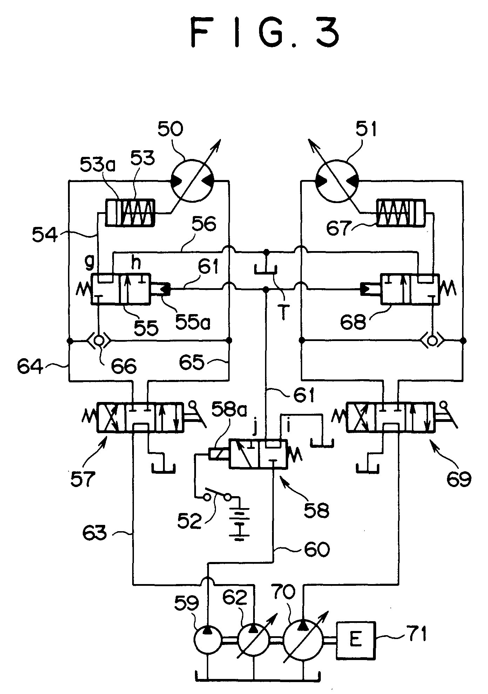

This construction machine is designed so that traveling motors 50, 51 for driving crawler may be changed from first speed (first gear) to second speed (second gear), as shown in FIG. 3.

First, in a case of the first speed travel, a switch 52 is turned off. A description will be made using the motor 50 as a representative. A tilting angle adjusting cylinder 53 is connected to a tank T through an oil passage 54, a position "g" of a speed switching valve 55, and an oil passage 56. At that time, the motor 50 is tilted on the large capacity side. Accordingly, when a travel control valve 57 is operated, the motor 50 exhibits a large torque to enable the first speed traveling.

Subsequently, in a case of the second speed travel, the switch 52 is turned on. At that time, a solenoid 58a of a solenoid valve 58 is turned on electricity, and the solenoid valve 58 is switched from a tank communicating position "i" to a pilot pump communicating position "j". Accordingly, pilot pressure exerts on a pressure receiving part 55a of the speed switching valve 55 via an oil passage 60, a position "j" of the solenoid valve 58 and an oil passage 61 from a pilot pump 59. Thereby, the speed switching valve 55 is switched from a position "g" to a position "h".

In this state, when the travel control valve 57 is operated, pressure

### DESCRIPTION OF THE INVENTION

It is an object of the, present invention to provide a construction machine with a speed switching function capable of obtaining adequate travel speed according to expanded and contracted states of crawler frame width.

The construction machine according to the present invention has the constituted listed below.

That is, a construction machine with retractable crawler frames using crawler shoes in a direction of width thereof, comprising: detection means for detecting an extended state or a retracted state of the crawler frames; travel driving means for driving the crawler shoes; speed switching means for switching speed of the travel driving means; and switching control means for switching speed of the travel driving means by the speed switching means when the extended state or the retracted state of the crawler frames is detected by the detection means.

In this case, adequate travel speed can be obtained according to the extended or contracted state of the width of the crawler frame.

Further, preferably, the speed switching means switches the travel driving means to low rotation high torque or high rotation low torque. Preferably, the switching control means switches destination of switching of the speed switching means when the retracted state of the crawler frame is detected by the detection means.

In this case, when the crawler frame is in a retracted state, especially, when the crawler frame is in the most retracted state, the switching control means forcibly fixes revolving speed of a traveling motor to lower speed side. Thereby, the crawler frame is set to lower speed travel at which high torque is obtained in the most contracted state. Accordingly, it is possible to prevent the decreasing of a steering force of the crawler produced when a spin turn is carried out, for example, in the state that the travel driving means is set to high rotation.

Further, the detection means may comprise a pressure sensor for detecting pressure of a pressure supply and discharge passage connected to a hydraulic cylinder for expanding and contracting the crawler frame.

In this case, because of the pressure sensor, it is possible to detect the retracted state by a simple constitution.

Further, the travel driving means may comprise a variable capacity type traveling motor. The speed switching means may comprise a tilting angle adjusting device for changing a tilting angle of the traveling motor, and a speed switching valve for supplying a hydraulic signal for changing a tilting angle to the tilting angle adjusting device.

In this case, since the speed switching means comprise a conventional tilting angle adjusting device for changing a tilting angle of the traveling motor, and a speed switching valve for supplying a hydraulic signal for changing a tilting angle to the tilting angle adjusting device, it can be also applied to an existing hydraulic circuit.

Further, preferably, in the supply and discharge oil passage, the pressure sensors are disposed on a rod side and on a head side, respectively, and the switching control means is so constituted as to switch, when pressure of the supply and discharge oil passage obtained from the pressure sensors is high pressure on the rod side of the hydraulic cylinder and is open pressure on the head side, destination of switching of the speed switching means to low rotation high torque side.

Of course, it is possible that retraction of the crawler frame be judged merely by detection of the open pressure on the rod side. However, in the actual operation, in a case where shock is applied to the construction machine from outside, confined pressure is sometimes generated on the head side of the hydraulic cylinder.

In this case, in the constitution for detecting only the open pressure on the rod side, there is the possibility that despite retraction of the crawler frame being not carried out, the traveling motor is erroneously operated to be switched from the first speed to the second speed. Accordingly, if both pressure states on the rode side and on the head side in the supply and discharge oil passage are detected as described above, the above-described erroneous operation can be prevented.

### BRIEF DESCRIPTION OF THE DRAWINGS

FIG. 1a is a plan view showing an expanding mechanism of a construction machine according to the present invention, and FIG. 1b is a front view thereof;
FIG. 2 is a hydraulic circuit view showing the constitution of a speed switching device loaded on the construction machine of the present invention; and
FIG. 3 is a view corresponding to FIG. 2 showing a conventional speed switching device.

### BEST MODE FOR CARRYING OUT THE INVENTION

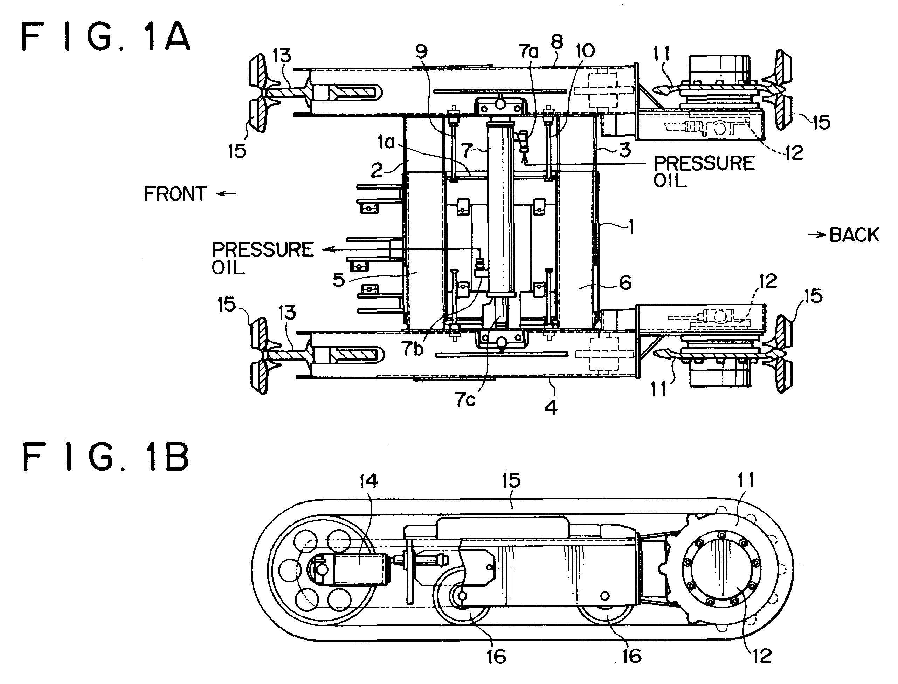

Embodiments of the present invention will be described with reference to FIG. 1a to FIG. 2. This is one embodiment of the present invention, and the invention is not limited thereto.

FIG. 1a and FIG. 1b show an expanding mechanism of a crawler frame of the construction machine according to the present invention, FIG. 1a being a plan view and FIG. 1b being a front view.

In these drawings, guide tubes 2 and 3 comprising a hollow angle pipe are provided in parallel in a direction of width of the machine body in front and rear of a lower center frame 1 which is one member of a lower travel body supporting an upper revolving body. Arms 5 and 6 comprising an angle tube projected from a left crawler frame 4 are fitted in a nesting manner in the guide tubes 2 and 3.

A spanner cylinder 7 (a hydraulic cylinder) is mounted in a direction of width in a substantially intermediary between the guide tubes 2 and 3. The head side and the rod side thereof are connected to a right crawler frame 8 and a left crawler frame 4, respectively.

In this case, when pressure oil is supplied from a head side 7a of the spanner cylinder 7 and is discharged from a rod side 7b to extend a rod 7c, the arms 5 and 6 are guided to deliver by the guide tubes 2 and 3. Thereby, the left and right crawler frames 4 and 8 are bulged in a direction of width.

Numerals 9 and 10 designate rods for controlling an extending limit of the crawler frames 4 and 8. When the extreme ends of the rods come in contact with a through-hole edge of a stopper plate 1a provided on the center frame 1, the extension is stopped.

In the figures, numeral 11 designates a sprocket driven by a traveling motor 12; 13 an idler; 14 an idler adjusting mechanism for adjusting tension of a crawler shoe; 15 a crawler shoe extended between the sprocket 11 and the idler 14; and 16 a roller.

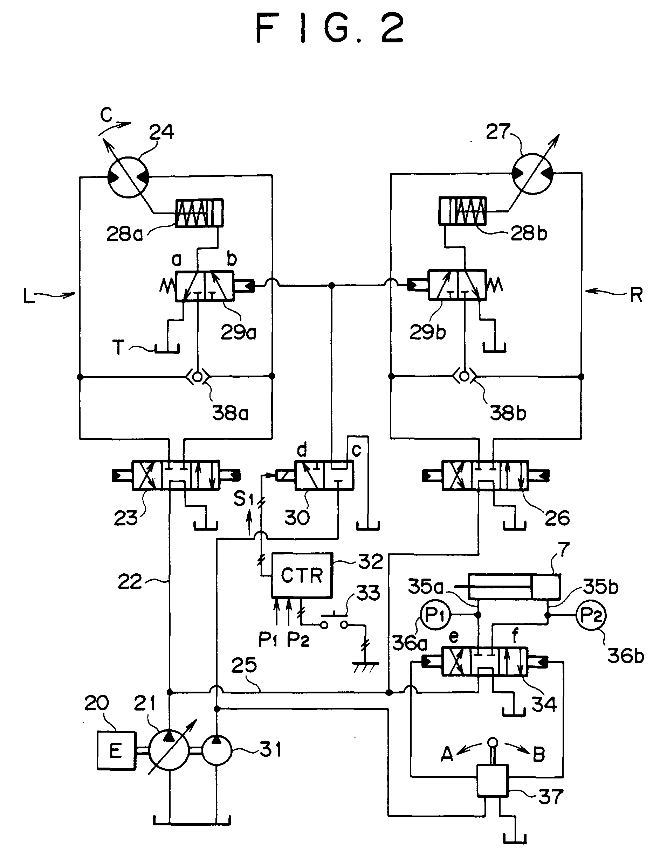

FIG. 2 shows the constitution of a speed switching device loaded on the construction machine constituted as described above. A variable capacity type hydraulic pump 21 is driven by an engine 20. Pressure oil discharged from the hydraulic pump 21 is introduced into a travel control valve 23 through an oil passage 22. After the pressure oil has been controlled in flow rate and direction, it is supplied to a left traveling motor 24 of a drive circuit L for a left traveling motor. Pressure oil discharged from the hydraulic pump 21 is also introduced into a travel control valve 26 through an oil passage 25 branched from the oil passage 22. The pressure oil is supplied to a right traveling motor 27 of a drive circuit R for a right traveling motor. Both the left and right traveling motors 24 and 27 function as travel driving means.

The drive circuit R for a right traveling motor and the drive circuit L for a left traveling motor are of substantially the same constitution. Therefore, the circuit constitution of the drive circuit L for a left traveling motor will be described as a representative.

The left traveling motor 24 is adjusted in a tilting angle by a tilting angle adjusting cylinder 28a. This enables switching from the first speed as low speed rotation to the second speed as high speed rotation and vice versa.

The cylinder 28a is connected to a speed switching valve 29a. The valve 29a has a tank communicating position "a" and a hydraulic pump communicating position "b". When pilot pressure from a speed switching solenoid valve 30 is not exerted, a position is the position "a". In this case, an oil chamber of the cylinder 28a is communicated with a tank T, and an inclination of a swash plate of the left traveling motor 24 becomes larger due to spring pressure. That is, the first speed is set.

On the other hand, when the pilot pressure exerts on the speed switching valve 29a, a position is switched to the position "b". A part of circuit pressure of the drive circuit L for a left traveling motor is supplied to an oil chamber of the cylinder 28a. Thereby, an inclination of the swash plate of the left traveling motor 24 becomes smaller against the spring pressure. That is, the second speed is set. The drive circuit L for a left traveling motor functions as speed switching means.

The solenoid valve 30 has a tank communicating position "c" and a pilot pump communicating position "d". Switching between both the positions "c" and "d" is carried out by instructions output from a controller 32. A speed switching switch 33 which normally operates for opening is connected to the input side of the controller 32. When the switch 33 is in an off state, a signal is not output to assume the first speed setting. When the switch is turned on, a signal is transmitted to the controller 32 to instruct the second speed setting. Further, signals P1 and P2 from a pressure switch described later are also input on the input side of the controller 32. The controller 32 functions as switching control means.

The spanner cylinder 7 (see FIG. 1) is connected to the oil passage 25 for supplying pressure oil through a width switching valve 34. A pressure switch 36a and a pressure switch 36b are provided respectively in a rod side oil passage 35a and a head side oil passage 35b for connecting the width switching valve 34 and the spanner cylinder 7. The oil passages 35a and 35b function as a pressure oil supply and discharge passage. The pressure switches 36a and 36b function as detection means for detecting whether or not the crawler frame is in a retracted state.

When the width switching lever 37 is fallen in a direction of "A", the width switching valve 34 is switched to a position "e" to extend the spanner cylinder 7. On the other hand, when fallen in a direction of "B", it is switched to a position "f" to contract the spanner cylinder 7. It is noted that control pressure from the pilot pump 31 is supplied to the primary side of the lever 37.

The operation of the speed switching device having the above-described constitution will be explained hereinafter.

### (a) Extending state of the crawler frame

When the width switching lever 37 is fallen in a direction of "A", the width switching valve 34 is switched from a neutral position to the position "e". Thereby, pressure oil from the hydraulic pump 21 is supplied to the head side of the spanner cylinder 7 to extend the spanner cylinder 7.

The pressure of the rod side oil passage 35a and the head side oil passage 35b is detected by the pressure switches 36a and 36b. Therefore, a signal indicative of high pressure on the head side and a signal indicative of open pressure are transmitted to the controller 32. Accordingly, the controller 32 is able to detect that the crawler frame is in an extended state on the basis of the state of pressure output from the pressure switches 36a and 36b.

In the state that the crawler is extended, speed switching control from the first speed to the second speed is carried out.

More specifically, when the speed switching switch 33 is turned on to select the second speed, the controller 32 switches the speed switching solenoid valve 30 to the position "d".

Thereby, control pressure from the pilot pump 31 is transmitted to the solenoid of the speed switching valve 29a through the position "d". Accordingly, the speed switching valve 29a is switched from the position "a" to the position "b".

Subsequently, a part of circuit pressure of the drive circuit L for a left traveling motor is supplied to the oil chamber of the tilting angle adjusting cylinder 28a through a shuttle valve 38a. Thereby, the swash plate is inclined in a direction of arrow "C" against spring pressure of the cylinder 28a to enable setting of the traveling motor 24 to the second speed.

It is noted that in a case where the speed switching switch 33 is in off state, pressure oil is not supplied to the oil chamber of the cylinder 28a as mentioned above. Therefore, the tilting angle remains unchanged, and the traveling motor 24 maintains setting of the first speed.

As described above, in the state that the crawler frame is extended, the speed switching switch 33 is turned off or on, whereby the first speed or the second speed can be selected, respectively.

### (b) Contracted state of the crawler frame

When the width switching lever 37 is fallen in a direction of "B", the width switching valve 34 is switched from the neutral position to the position "f". Accordingly, pressure oil from the hydraulic pump 21 is supplied to the rod side of the spanner cylinder 7 to contract the cylinder.

At this time, a signal indicative of high pressure on the rod side and a signal indicative of open pressure on the head side are transmitted to the controller 32. That is, the controller 32 is able to detect that the crawler frame is in the contracted state on the basis of the state of pressures output from the pressure switches 36a and 36b.

The controller 32 controls so that even if the speed switching switch 33 is turned on to select the second speed travel mode, instructions output to the speed switching solenoid valve 30 are cut to maintain the first speed.

The purpose of maintaining the first speed is as follows: That is, when in the state that the crawler frame is contracted, for example, when a mode of the second speed is selected when a spin turn is carried out, the steering force of the crawler becomes small since the torque of the traveling motor is small. Accordingly, because there exist any difficulties in starting and stopping a traveling motion. In the present embodiment, when the crawler frame is contracted, both the traveling motors 24 and 27 are fixed to the first speed, and therefore, the short of steering force can be overcome to prevent the stoppage of the steering force from becoming worse.

When a signal indicative of high pressure on the rod side and a signal indicative of open pressure on the head side are not imparted, the controller 32 resets control to terminate cutting of instructions output to the speed switching solenoid valve 30.

While in the above-described embodiment, the detection means is constituted by a pressure sensor, it is noted that the detection means is not limited thereto but for example, a limit switch for detecting a storage state of an arm, or a position sensor such as a proximity switch can be also employed.

While one embodiment has been disclosed as described above, it is to be noted that the scope of protection of the present invention is not limited thereto.

### INDUSTRIAL APPLICABILITY

According to the present invention, there can exhibit the effect capable of obtaining the adequate travel speed according to the expanded or contracted state of the crawler frame width.

The present invention provides a construction machine with a speed switching function having retractable crawler frames using crawler shoes, comprising: detection means for detecting an extended state or a retracted state of the crawler frames; travel driving means for driving the crawler shoes; speed switching means for switching speed of the travel driving means; and a controller for controlling destination of switching of the speed switching means when the retracted state of the crawler frames is detected by the detection means. Adequate travel speed can be obtained according to the extended or retracted state of the crawler frames.

## Claims

1. A construction machine with retractable crawler frames (4, 8) using crawler shoes (15, 15) **characterized in that** the construction machine comprises:
retraction detection means (36a, 36b) for detecting an extended state or a retracted state of the crawler frames; travel driving means (24, 27) for driving the crawler shoes; speed switching means (33) for switching speed of the travel driving means; and switching control means (32) for switching speed of the travel driving means (24, 27) by the speed switching means (33) when the extended state or the retracted state of the crawler frames (4, 8) is detected by the detection means (36a, 36b).

2. The construction machine according to claim 1 wherein said speed switching means (33) switches said travel driving means (24, 27) to low rotation high torque or high rotation low torque.

3. The construction machine according to claim 2 wherein when the retracted state of the crawler frames (4, 8) is detected by said retraction detection means (36a, 36b), said switching control means (32) switches destination of switching of said speed switching means (33) to the low rotation high torque side.

4. The construction machine according to any of claims 1 to 3 wherein said travel driving means (24, 27) comprises a variable capacity type traveling motor, and said speed switching means (33) has tilting angle adjusting devices (28a, 28b) for changing a tilting angle of the traveling motor, and speed switching valves (29a, 29b) for supplying a hydraulic signal for changing a tilting angle to the tilting angle adjusting devices.
